# EUROPEAN PATENT APPLICATION

(11) **EP 1 427 091 A1**
(43) Date of publication of application: **09.06.2004**
(21) Application number: 02026917.1
(22) Date of filing: 03.12.2002
(51) Int. Cl.: H02M 1/12

(54) **Resonant converter with integrated boost means**

(71) Applicant: Sony International (Europe) GmbH, 10785 Berlin (DE)
(72) Inventor: Facius, Zoltan, c/o Adv. Techn. Center Stuttgart, 70327 Stuttgart (DE); Rehm, Markus, 78052 Villingen-Schwenningen (DE); Rodriguez Durán, José Ignacio, 78050 Villingen-Schwenningen (DE)
(74) Representative: Müller - Hoffmann & Partner

(57) **Abstract**

Proceeding from conventional switched-mode power supply topologies showing a resonant converter stage combined with a preceding boost converter stage for power factor correction and/or for generation of a second output voltage, the present design describes a new topology of a switched-mode power supply with integrated boost means. The present switched-mode power supply comprises a boost means (1) for transforming a rectified AC input voltage (Uᵢₙ) in a primary regulated output voltage (Uₚᵣᵢ) and/or for use as a power factor correction circuit and a resonant converter means (2) for generating a secondary regulated output voltage (Uₒᵤₜ). Whereas in conventional two-stage switched-mode power supplies the two stages are operating substantially independently, in the present design the boost means (1) is coupled by a coupling network (10) to the resonant converter means, enabling controlling of the boost means (1) by control means (IC, Sres) of the resonant converter means (2), reducing thereby circuit complexity, switching losses and EMI-emission.

## Description

The invention relates to a switched-mode power supply comprising a boost means showing a boost inductor and being capable of transforming a rectified AC input voltage Uᵢₙ into a primary regulated output voltage Uₚᵣᵢ at a first load terminal and a resonant converter means connected in series to said boost means and being capable of transforming said primary regulated output voltage into at least one secondary regulated output voltage Uₒᵤₜ across a load connected between a second and a third load terminal.

A general requirement for the design of switched-mode power supplies is to meet regulation standards as the EN61000.3.3 by simultaneously increasing conversion efficiency, reducing circuit complexity and reducing the number of components.

Compared to conventional hard-switching switched-mode power supplies zero-current or zero-voltage switching resonant mode power converters offer higher efficiency, lower switching losses, lower EMI- (electromagnetic interference) emission and smaller size.

Disadvantageously resonant mode power converters use usually capacitive input filters when powered from an AC power line. This results in a rectification of the AC line causing a high portion of harmonic current loads at the AC power line. Supplying a switched-mode power supply with resonant mode power converter topology by the public supply mains as AC power line the amount of current allowed in each harmonic and the shift of phase between real and apparent power obtained from the mains must fulfil requirements of regulation standards. A regulation standard for current harmonics in household appliances and other electrical equipment is for example the EN 61000.3.2.

Commonly used methods for adapting resonant mode power converters to the regulation standards are power factor correction (PFC) circuits arranged between the mains and the resonant mode power converter.

Power factor correction is most frequently accomplished using a boost converter shaping the input current approximately sinusoidal, whereby the input current follows as close as possible the rectified AC line voltage. Advantageously boost topologies are used as PFC stages in applications requiring a second regulated output voltage, wherein the output of the boost stage serves both as input for a following resonant mode power controller stage and as supply for an additional primary output voltage. Typical examples for this kind of application are power supplies designed for Data- and Video projector devices, whereby a primary output voltage of the power supply supplies a projector lamp and a secondary isolated output voltage a projector electronic.

In this case, a conventional design for a switched-mode power supply comprises a resonant mode power converter and a hard-switching converter as for example a boost converter, arranged in series between the resonant mode power converter and the AC power line (mains). The boost converter supplies a first regulated output voltage with high efficiency decoupling at the same time the mains from the harmonic current loads caused by the resonant mode power converter. The resonant mode power converter supplies several secondary regulated output voltages at the cost of lower conversion efficiency, higher EMI-emission, higher circuit complexity and higher costs.

The object of the present invention is to reduce component complexity for switched-mode power supplies based on a resonant mode power converter topology and a boost means for power factor correction or for obtaining a second regulated output voltage.

This object is achieved by the invention specified in claim 1. Advantageous developments of the invention are specified in the dependent claims.

According to the invention, a switched-mode power supply shows a coupling network arranged between a boost means supplying a primary regulated output voltage Uₚᵣᵢ and a resonant converter means supplying a secondary regulated output voltage Uₒᵤₜ. The coupling network enables controlling of the boost means by the resonant converter means. With the coupling network, the voltage at a floating node of the resonant circuit of the resonant converter means is modulated with the switching frequency of the resonant converter means and also with the frequency of the rectified AC input voltage Uᵢₙ.

The coupling network enables magnetizing of a boost inductor of the boost means by means of a switching facility of the resonant converter means.

Compared with conventional two-stage switched-mode power supplies consisting of a conventional boost converter as a first stage and a resonant converter as a second stage, the boost means according to the invention requires neither an additional switching facility for the boost means nor a pulse width modulation (PWM) controller for controlling the switching facility. This reduces significanty the number of components compared to conventional designs. Further, switching losses are reduced, for slight additional switching losses in the resonant converter means are overcompensated by the spared switching losses of a conventional hard-switching boost stage.

In an advantageous configuration, the boost means comprises a serial arrangement of a boost inductor and a boost diode. Then charging and discharging of energy stored in the boost inductor, hence magnetizing and demagnetizing of the boost inductor, is controlled by the resonant converter means. By means of the coupling network a regulation of the output voltage of the boost means can be obtained. Compared to conventional resonant converter a reduction of harmonic current loads on the AC input voltage is achieved. The magnetizing current of the boost inductor is controlled by the means of the switching facility of the resonant converter means similar to a conventional boost converter and therefore does not shift substantially the phase between real and apparent power drawn from the source of the AC input voltage.

Operation of the inventive switched-mode power supply is stable over a wide range of the AC input voltage. The inventive switched-mode power supply can easily be designed for a permissible tolerance of the AC input voltage peak value of ±10 %. Even outside the permissible tolerance operation is stable for a wide range of the AC input voltage peak value, though a slight decrease in efficiency occurs.

Thus, the present invention describes a completely new and general solution for a power correction circuit for switched-mode power supplies.

In applications supplying additionally a primary regulated output voltage Uₚᵣᵢ across a second load applied at the output of the boost means, there is substantially no need for an additional power factor correction circuit.

Thus, a switched mode power supply according to the invention consists of a boost means and a resonant converter means. The boost means converts a rectified AC input voltage Uᵢₙ applied between an input terminal and a reference terminal of the boost means into a primary voltage Uₚᵣᵢ available between a first load terminal and the reference terminal. A boost node is formed between the boost inductor and a boost diode. A first terminal of the coupling network is connected to the boost node.

The resonant converter means converts the primary regulated output voltage Uₚᵣᵢ into at least one secondary regulated output voltage Uₒᵤₜ across a first load arranged between a second and a third load terminal. The resonant converter means comprises a switching facility controlled by a resonant mode controller and a resonant inductor. The switching facility and the resonant controller are connected in series to the first load. A resonant node is normally formed between the resonant inductor and the first load. In more complex designs of the resonant converter means one of a plurality of nodes can be selected as the resonant node according to general design rules. A second terminal of the coupling network is connected to the resonant node.

The resonant converter means transforms the primary regulated output voltage in one or more secondary regulated output voltages. If one of the secondary regulated output voltages is fed back to the resonant controller, the resonant converter means operates in well-known manner as a resonant converter regulating the output voltage Uₒᵤₜ across the first load by varying the duration and/of frequency of the ON-state of the switching facility. During the OFF-state of the switch the voltage at the resonant node changes continuously according to the resonance frequency of a resonant circuit formed by a resonant inductor and a resonant capacitor, wherein at least an inherent capacity of a real switch serves as the resonant capacitor. Additionally, by means of the coupling network, the voltage and the current in the resonant circuit is modulated with the rectified AC input voltage.

Vice-versa, the modulated voltage on the resonant node controls charging and discharging of the boost inductor. Assumed that the frequency of the AC input voltage is low compared to a switching frequency of the switching facility, a conductive state of the switching facility let decrease a voltage on the resonant node and increase a current through the coupling network magnetizing thereby the boost inductor. During the non-conductive state of the switching facility the voltage on the resonant node increases and the current through the coupling network decreases. The boost inductor is demagnetised by a forward current through the boost diode, recharging thereby a storage unit connected in parallel to a load of the primary regulated output voltage. The boost diode blocks the primary output voltage to the boost node, when the voltage across the boost node drops below the value of the primary output voltage.

Thus altering the duty cycle by varying the duration and/or the frequency of the ON-states of the resonant switching facility influences both the primary output voltage Uₚᵣᵢ and the secondary output voltage Uₒᵤₜ.

The primary output voltage Uₚᵣᵢ is determined by the value of the rectified AC input voltage Uᵢₙ and the duty cycle of the switching facility similar to the rules for boost conversion. The value of the magnetizing current is also influenced by the coupling network.

In conventional boost converter designs altering the duty cycle of the switching facility by varying the pulse width and/of frequency of a control signal controlling the switching facility regulates the output voltage of the boost converter. Being switched conductive the switching facility connects the boost node to the reference terminal. According to the invention, however, the primary regulated output voltage at the output terminal of the boost means is regulated by varying the pulse width and/of frequency of a control signal that controls a switching facility connecting the resonant node of the resonant converter means to the reference terminal.

The coupling network comprises all components necessary for a DC decoupling of the resonant node and for providing an appropriate node current magnetizing the boost inductor. According to an advantageous development of the invention the coupling network consists of a single boost capacitor C_{boost}. The component value of the boost capacitor is a trade off between a minimum power to be transferred by means of the boost capacitor and a component size to be minimized.

If the boost means is used for supplying an additional load on the primary regulated output voltage the ripple of the primary regulated output voltage is adjustable by a charge storage unit arranged between the first load terminal and the reference terminal.

The charge storage unit is advantageously realised by a storage capacitor, which component value results in known art from the permissible ripple at the primary regulated output voltage Uₚᵣᵢ.

The capacity of the resonant circuit of the resonant converter means is composed of an inherent capacity of a real switch used as switching facility, for example the average output capacity Cₒₛₛ of a power MOSFET and the capacity of the coupling network. An additional resonant capacitor arranged in series with the resonant inductor enables an adjustment of the resonance frequency of the resonant circuit that is independent from the component values of the boost capacitor, the switch and the boost inductor.

The switch of the resonant converter means is controlled by a control signal driven by a resonant mode controller. The resonant mode controller varies pulse width and/or frequency of the control signal in accordance with a sense current fed back to a feedback input of the resonant mode controller;

Thereby the sense current can follow at least one of the secondary regulated output voltages Uₒᵤₜ or the primary regulated output voltage Uₚᵣᵢ by transforming the respective voltage into a feedback current by means of an appropriate feedback network.

According to an advantageous development of the invention both the primary regulated output voltage Uₚᵣᵢ and the secondary output voltage Uₒᵤₜ are fed back by separated feedback paths to a feedback node. The total sense current results from the sum of the currents in both feedback paths, wherein the portions of the two feedback paths of the sense current are adaptable to the specifications for the load regulation of each stage.

The underlying topology of the resonant converter means in the present design is a zero voltage switched (ZVS) buck converter with the switch, the resonant circuit and the first load connected in series.

Further advantageous developments of the present invention are transformer coupled (isolated) topologies providing an isolated secondary regulated output voltage.

A first transformer coupled topology is a single ended forward converter similar to the buck converter, whereby a primary winding of an isolating transformer is arranged in the place of the first load of the buck converter and the load is applied to at least one secondary winding of the isolating transformer.

The resonant mode power conversion can be extended to multiple switch topologies, hence half-bridge and full-bridge topologies for higher power levels.

In half-bridge topologies the inventive switched-mode power supply leads to a further unique improvement. In the same way as in a conventional half-bridge topology a high side switch and a low side switch on a primary side of the isolating transformer are alternately switched conductive. If the low side switch is switched conductive, both the boost inductor and the resonant inductor are magnetized through the coupling network. The resonant inductor demagnetises during a conductive state of the high side switch charging additionally the storage unit at the first load terminal. The voltage across the storage unit, which is the primary regulated output voltage Uₚᵣᵢ , is boosted.

The features and advantages of invention will be further elucidated from the following detailed description of time diagrams, tables and exemplary embodiments thereof with reference to the figures, wherein:
- **Fig. 1**: shows a schematic block diagram of a simplified first example for a switched-mode power supply according to the invention,
- **Fig. 2**: shows a schematic block diagram of a conventional switched-mode power supply with a boost stage for power factor correction,
- **Fig. 3**: shows a circuit diagram of a second example for a switched-mode power supply with two feedback paths according to the invention,
- **Fig. 4**: shows a circuit diagram of a third example for a switched-mode power supply with one feedback path according to the invention,
- **Fig. 5a-d**: show recorded time diagrams for a drain current I_{LS} and a drain voltage U_{LS} recorded at a low side switch of the switched-mode power supply shown in Fig. 4,
- **Fig. 6a-b**: show recorded time diagrams for a current I_{D} through a boost diode D_{boost} of the switched-mode power supply shown in Fig. 4,
- **Fig. 7a-c**: show recorded time diagrams for the current I_{D}, the voltage U_{LS} and a voltage U_{BN} at a boost node of the switched-mode power supply shown in Fig. 4,
- **Fig. 8a-c**: show recorded time diagrams for the voltage U_{LS} and a current I_{L} through a resonant inductor Lᵣₑₛ of the switched-mode power supply shown in Fig. 4,
- **Fig. 9**: shows a further recorded time diagram for the current I_{L} through the resonant inductor Lᵣₑₛ of the switched-mode power supply shown in Fig. 4,
- **Fig. 10a-b**: show recorded time diagrams for the current I_{L} through the resonant inductor Lᵣₑₛ and a voltage U_{CS} across a serial resonant capacitor of the switched-mode power supply shown in Fig. 4,
- **Fig. 11a-c**: show recorded time diagrams for the voltage U_{LS} and a node current I_{C} through a boost capacitor C_{boost} of the switched-mode power supply shown in Fig. 4,
- **Fig. 12a-h**: show recorded time diagrams for a current I_{LB} through a boost inductor L_{boost} and further internal signals of the switched-mode power supply shown in Fig. 4,
- **Fig. 13a-b**: show time diagrams for the AC input voltage U_{AC} and the AC current I_{AC} recorded at the inputs of the switched-mode power supply shown in Fig. 4, and
- **Fig. 14**: shows a table with measured values of a spectral analysis of the AC input current for the switched-mode power supply shown in Fig. 4.

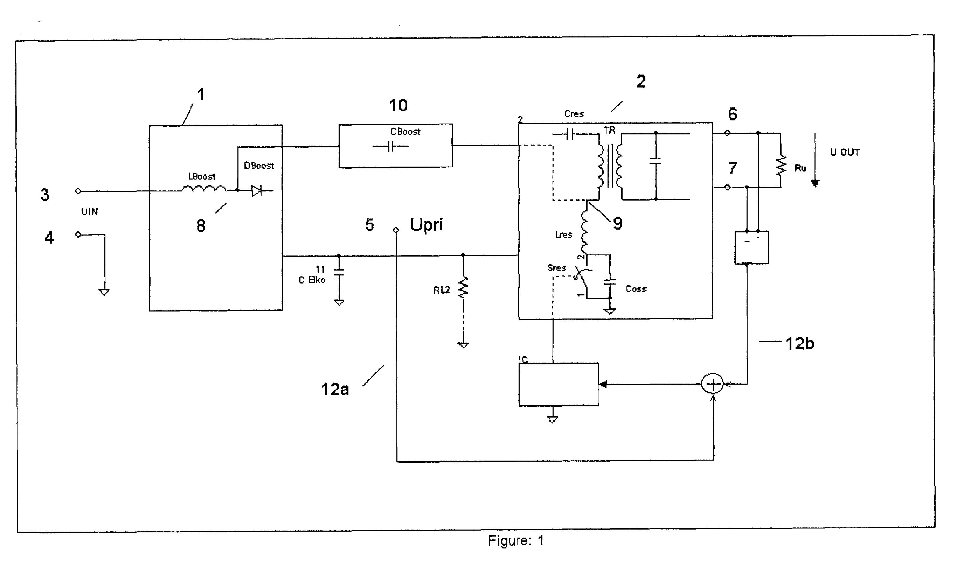

Referring to Fig. 1, a switched mode power supply according to the invention consists of a boost means 1, a resonant converter means 2 and a coupling network 10. The boost means 1 converts a rectified AC input voltage Uᵢₙ applied between an input terminal 3 and a reference terminal 4 of the boost means 1 into a primary voltage Uₚᵣᵢ between a first load terminal 5 and the reference terminal 4. The resonant converter means 2 converts the primary regulated output voltage Uₚᵣᵢ into a secondary regulated output voltage Uₒᵤₜ across a first load RL1 arranged between a second 6 and a third 7 load terminal.

The resonant converter means 2 comprises at least a switch Sᵣₑₛ controlled by a resonant mode controller IC and a resonant inductor Lᵣₑₛ, both connected in series to the first load RL1. Thereby a node between the first load RL1 and the resonant inductor Lres forms a resonant node 9.

The boost means 1 comprises a boost inductor L_{boost} and a boost diode D_{boost} arranged in series between the input terminal 3 and the first load terminal 5. The boost inductor L_{boost} is connected to the first input terminal 3 and the boost diode D_{boost} is arranged in forward direction between the boost inductor L_{boost} and the first load terminal 5. A boost node 8 is formed between the boost inductor L_{boost} and the boost diode D_{boost} .

A coupling network 10 connects the boost node 8 of the boost means 1 to the resonant node 9 of the resonant converter means 2.

In the following, the operation of the switched-mode power supply according to the invention is described in a simplified approach:

The resonant converter means 2 operates in well-known manner, regulating the output voltage Uₒᵤₜ across the first load RL1 by varying the duration of the ON-state of the switch Sᵣₑₛ. During the OFF-state of the switch the voltage at the resonant node 9 changes continuously according the resonance frequency of a resonant circuit formed by the resonant inductor Lᵣₑₛ and a resonant capacitor, wherein at least an inherent capacity Cₒₛₛ of a real switch Sᵣₑₛ serves as the resonant capacitor. Additionally, by means of the coupling network 10, the voltage on the resonant node 9 and current in the resonant circuit is modulated with the rectified AC input voltage Uᵢₙ.

Vice-versa, the modulated voltage on the resonant node 9 controls magnetizing (charging) and demagnetising (discharging) of the boost inductor L_{boost}. Assumed that the frequency of the AC-input voltage Uᵢₙ is low compared to the frequency at the resonant node 9, a decreasing voltage on the resonant node 9 (Sres conductive) leads to an increasing current Ic through both the coupling network 10 and the boost inductor L_{boost} charging the boost inductor L_{boost}. An increasing voltage on the resonant node 9 (Sres non-conductive) leads to a decreasing node current Ic, enabling a forward current through the boost diode D_{boost} caused by the demagnetising current of the boost inductor L_{boost}. The boost diode D_{boost} blocks the primary voltage Uₚᵣᵢ to the voltage on the boost node 8, when the voltage across the boost node 8 drops below the primary voltage Uₚᵣᵢ.

Thus changing the duration and/or the frequency of the ON-states of the switch Sᵣₑₛ regulates both the primary regulated output voltage Uₚᵣᵢ and the secondary regulated output voltage Uₒᵤₜ.

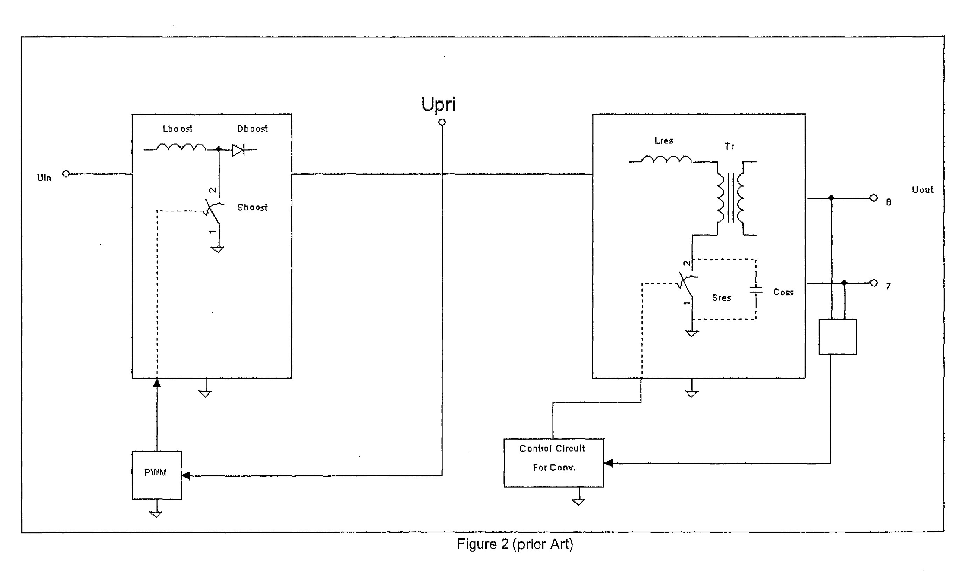

Referring to Fig. 2, in a conventional switched mode power supply a boost stage 1' comprises in addition to a boost inductor L_{boost} and a boost diode D_{boost} a switching facility S_{boost}, normally a power MOSFET, and a pulse width modulator (PWM) controller circuit PWM. The boost stage 1' and a resonant converter stage 2' operate independently at costs of an additional switching circuit S_{boost},. The switching circuit comprises complex and expensive components as a controller and a power MOSFET, occupies board space, increases board complexity, emits electromagnetic interference and shows additional switching losses.

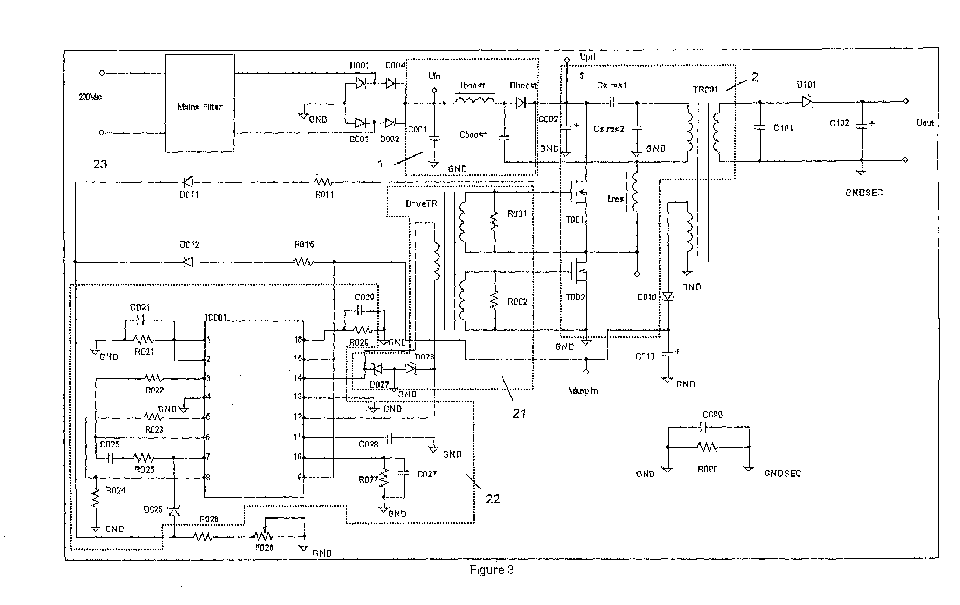

The switched-mode power supply according to Fig. 3 shows a resonant mode power converter in half-bridge topology with integrated boost means according to a further example of the invention.

The integrated boost means 1 comprises a boost inductor L_{boost} and a boost diode D_{boost}. The boost inductor L_{boost} and the boost diode D_{boost} are connected in series between an input terminal 3 and a first load terminal 5 of the switched-mode power supply, whereby between the boost inductor L_{boost} and the boost diode D_{boost} a boost node 8 is formed. The boost diode D_{boost} conducts, when the voltage on the boost node 8 referenced to a potential GND at the reference terminal 4 exceeds a voltage Uₚᵣᵢ at the first load terminal 5.

The input voltage of the boost means is derived from the mains voltage, typically 230VAC, by filtering by means of mains filter and by rectifying by means of a full-bridge rectifier formed by the diodes D001 to D004.

A capacitor C001 connected in parallel to the input of the switched-mode power supply decouples the input lines from high frequent interference caused by the switches in the resonant converter means. The value of C001 is limited by circuit conditions, as for example a sufficient amplitude of a control signal derived from the rectified AC input voltage and applied to a resonant node in the resonant circuit of the resonant mode power converter is required.

A storage capacitor C002 is connected in parallel to the output of the boost means 1, represented by the first load terminal 5 and smoothes the primary voltage between the first load terminal 5 and the potential GND. The value of C002 is determined by the permissible ripple of the primary voltage Uₚᵣᵢ.

For an AC input voltage of 230 V effective value and a primary regulated output voltage of about 380 V supplying a standard projector lamp the relevant components of the boost means have following approximate values: C001: 100nF, C002: 150µF and L_{boost}: 195µH.

Besides the boost means 1, the resonant mode power converter comprises a resonant converter means 2, a coupling network 10, a driver circuit 21, a control circuit 22 and a feedback circuitry 23.

The coupling network 10 is a single capacitor arranged between the boost node 8 of the boost means 1 and a resonant node 9 of the resonant converter means 2.

The resonant converter means shows an isolating transformer arranged in half-bridge topology comprising two identical switching paths formed respectively by a high side switch T001, a low side switch T002 and a resonant capacity Cs.resl, Cs.res2. The switches are realised by power MOSFETs, showing an inherent capacity Cₒₛₛ. The MOSFETs T001, T002 are switched alternately, wherein a current through a primary winding of transformer TR001 and a resonant inductor Lres alters direction. The voltage across the primary winding of transformer TR001 is transformed to the secondary winding. On the secondary side the voltage across the secondary winding of the transformer TR001 is then rectified by the rectifier diode D101 and smoothed by a capacity C102. An additional resonant capacitor Cp.resl is arranged in parallel to the secondary winding of TR001. Transformed at the primary side capacitor Cp.resl offers an additional possibility for tuning the switching behaviour of the switched-mode power supply.

The driver circuit 21 comprises the Schottky-diodes D027 and D028, a driver transformator TR002 and minimum load resistors R001 and R002. They are arranged according to conventional design rules for driving the gates of the two power MOS fieldeffect transistors T001 and T002 in half-bridge topology by dual high current totem pole outputs of a resonant mode controller IC001.

The control circuit 22 comprises the resonant mode controller IC001 and its peripheral circuitry R021 to R027, R029, P026, C021, C025, C027 to C029 and D025. Arrangement and values of these components result from the operation conditions of the resonant mode controller according to the specifications of the resonant mode controller IC001.

The feedback circuitry 23 shows two feedback paths. The first feedback path comprises a resistor R011 deriving a first portion of the total feedback current from the primary regulated output voltage Uₚᵣᵢ. The second feedback path comprises an additional sense winding on transformer TR001, a rectifier diode D010, a smoothing capacitor C010 and a resistor R015. The voltage across the sense winding follows the secondary regulated output voltage Uₒᵤₜ, is rectified by D010 and C010 and transformed by resistor R015 in a second portion of the total feedback current. The two portions are summed up by means of the diodes D011 and D012 and converted in a suitable feedback voltage on the inverting input of the error amplifier circuit of the resonant mode controller IC001.

The values of the resistors in the two feedback paths determine the portion of regulation of output voltage Uₒᵤₜ and primary voltage Uₚᵣᵢ.

Network C090, R090 limits a floating of the isolated potentials towards the potentials on the primary side.

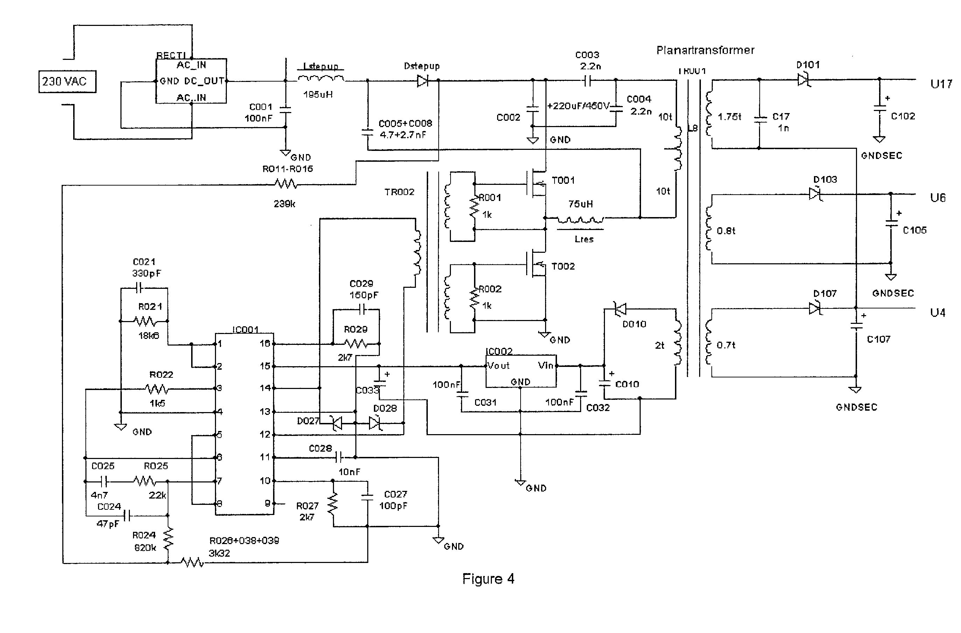

The switched-mode power supply according to Fig. 4 differs from the switched-mode power supply shown in Fig. 3 in the design of a feedback circuitry 23'. In the switched-mode power supply shown in Fig. 3 exclusively the primary regulated output voltage Uₚᵣᵢ is fed back to the resonant mode controller IC001 by means of the feedback circuitry 23'. As the secondary regulated output voltages result essentially from the primary regulated output voltage Uₚᵣᵢ and the transmission ratio of transformer TR001, the secondary regulated output voltages are indirectly regulated by regulation of the primary regulated output voltage Uₚᵣᵢ. This design is a suitable choice for applications with substantially constant load conditions on the secondary regulated output voltages.

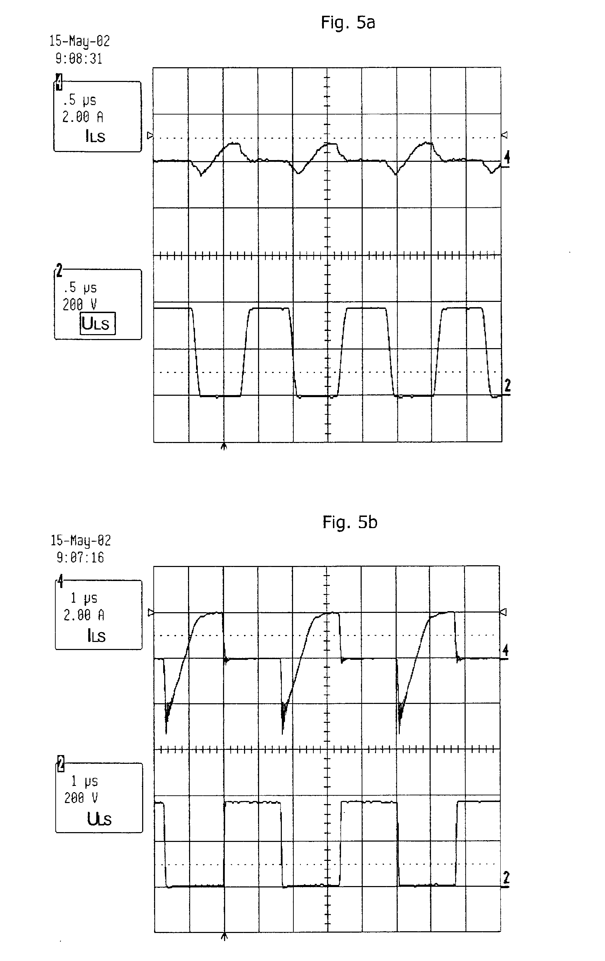

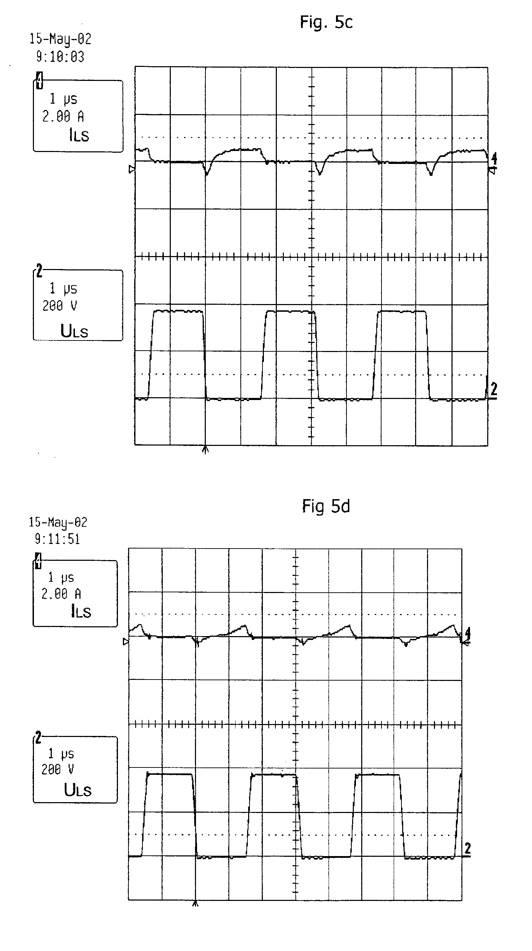

Fig. 5a to Fig. 5d show time diagrams for a drain current Ics and a drain voltage U_{CS} recorded by means of an oscilloscope at the low side switch of the switched-mode power supply according to Fig. 4. The switching frequency is 740 kHz. A primary power consumption was selected to 44 W during recording of Fig. 5a and to 160 W during recording of Fig. 5b to Fig. 5d. Fig. 5b to Fig. 5d refer to different phases of the sinusoidal AC input voltage Uᵢₙ. Fig. 5b refers to a peak voltage (Imax) while Fig. 5c and Fig. 5d refer to a zero transition (Imin) of the AC input voltage. Fig. 5c corresponds to a threshold voltage of the AC input voltage of about 40V and and Fig. 5d of about 380V.

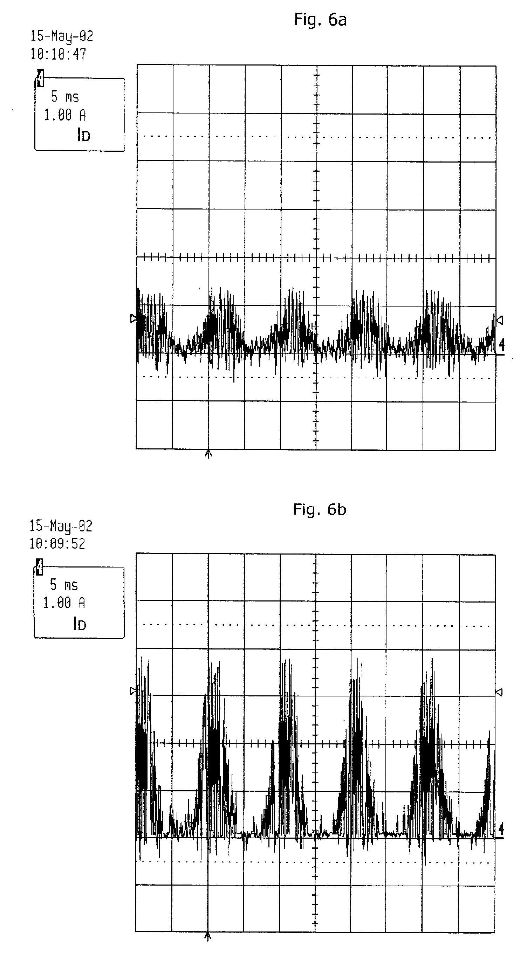

Fig. 6 shows the modulation of a current I_{D} through a boost diode D_{boost} of the inventive switched-mode power supply of Fig.4 with the switching frequency of about 740 kHz of the resonant converter means and the sinusoidal AC input voltage with a frequency of 50 Hz. The boost diode D_{boost} is formed of two diodes D004 in D005 connected in parallel. Fig. 6a and Fig. 6b differ with regard to the primary power consumption during recording, which is about 46 W for Fig. 6a and 160 W for Fig. 6b.

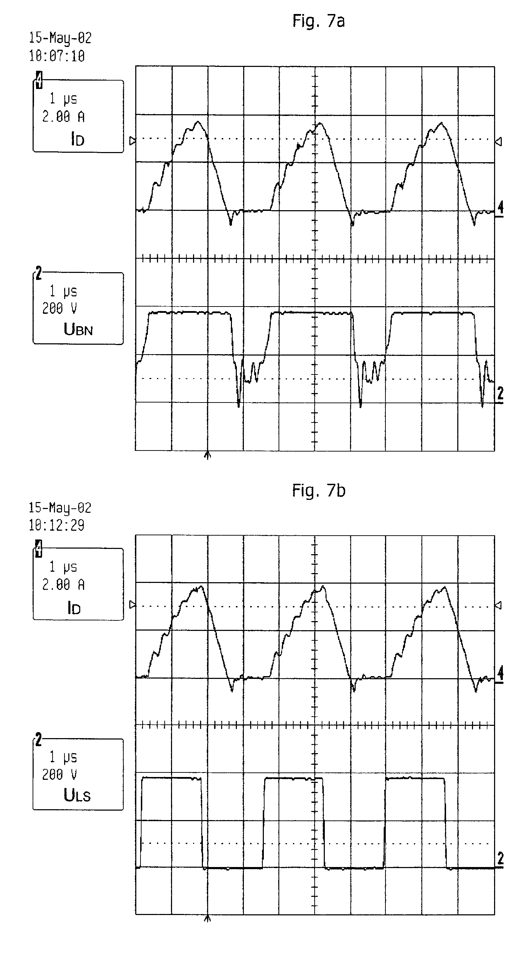

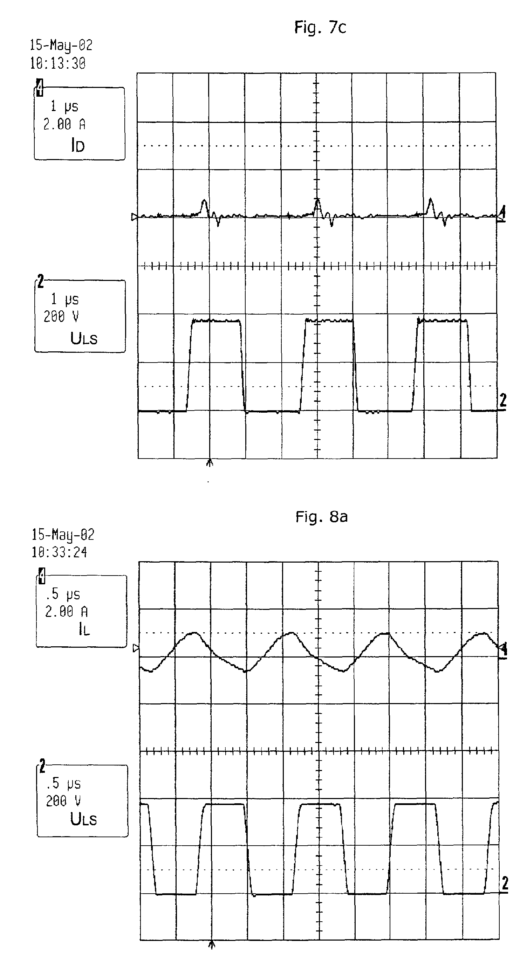

During recording of the time diagrams Fig. 7a to Fig. 7c for the current I_{D}, the voltage U_{LS} and a voltage U_{BN} at a boost node, the primary power consumption was selected to 160 W. Fig. 7a and Fig. 7b refer to the peak voltage (Imax), Fig. 7c to the zero transition of the AC input voltage.

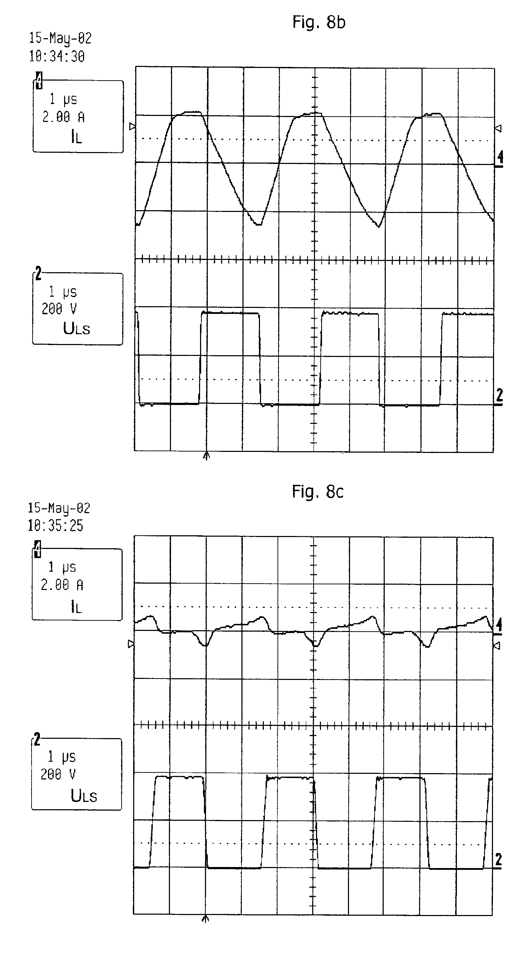

Fig. 8 show the correlation between the voltage U_{LS} and a current I_{L} through a resonant inductor Lᵣₑₛ. Primary power consumption during recording of time diagram Fig. 8a was selected to 44 W, during recording of Fig. 8b and 8c to 160W. Fig. 8b refers to the peak voltage (Imax), Fig. 8c to the zero transition (Imin) of the AC input voltage.

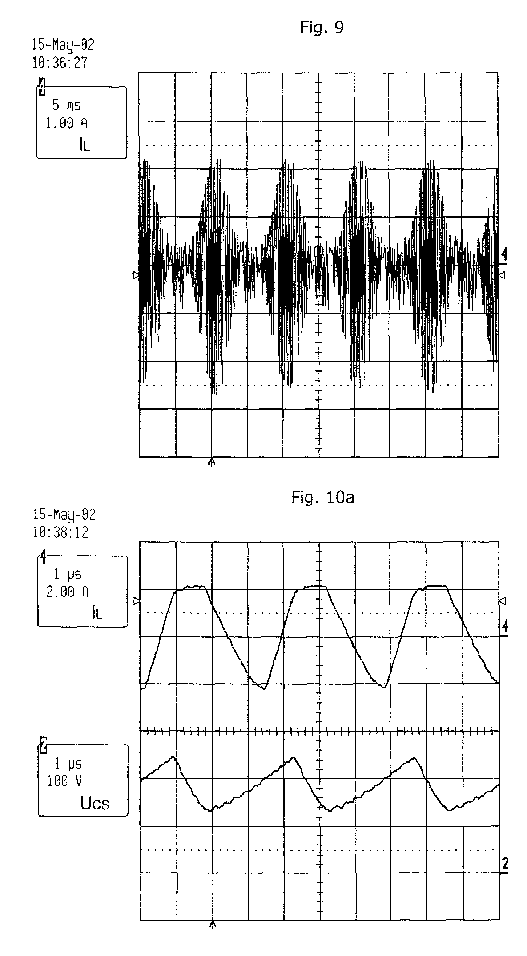

Fig. 9 is a further recorded time diagram for the current I_{L} through the resonant inductor Lres. The current IL is modulated with the switching frequency of the resonant converter means and the sinusoidal shaped AC input voltage. Primary power consumption is selected to 160 W.

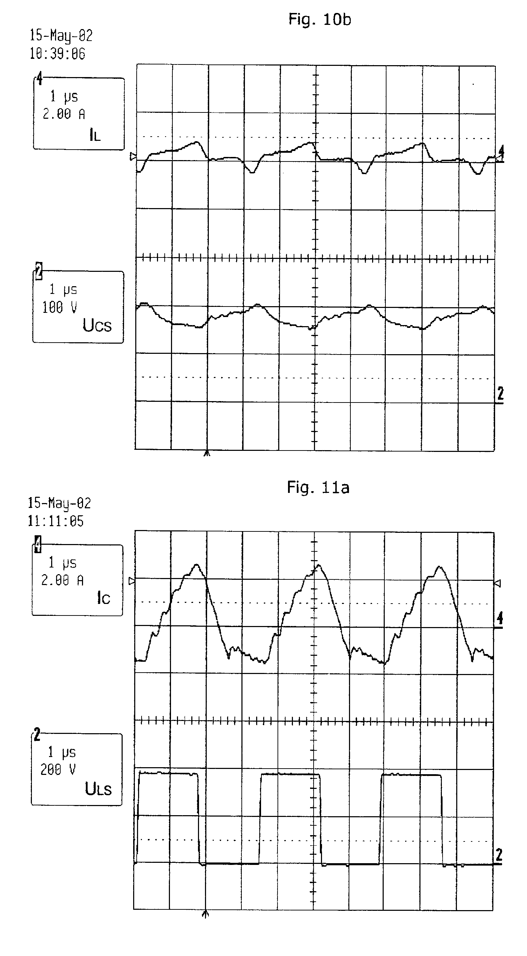

The time diagrams in Fig. 10a and Fig. 10b show the correlation between the current I_{L} through the resonant inductor Lres and a voltage U_{CS} across a serial resonant capacitor C004 of the switched-mode power supply of Fig. 4. As primary power consumption a value of 160 W is selected. Fig. 10a refers to the peak voltage (Imax), Fig. 10b to the zero transition (Imin) of the AC input voltage.

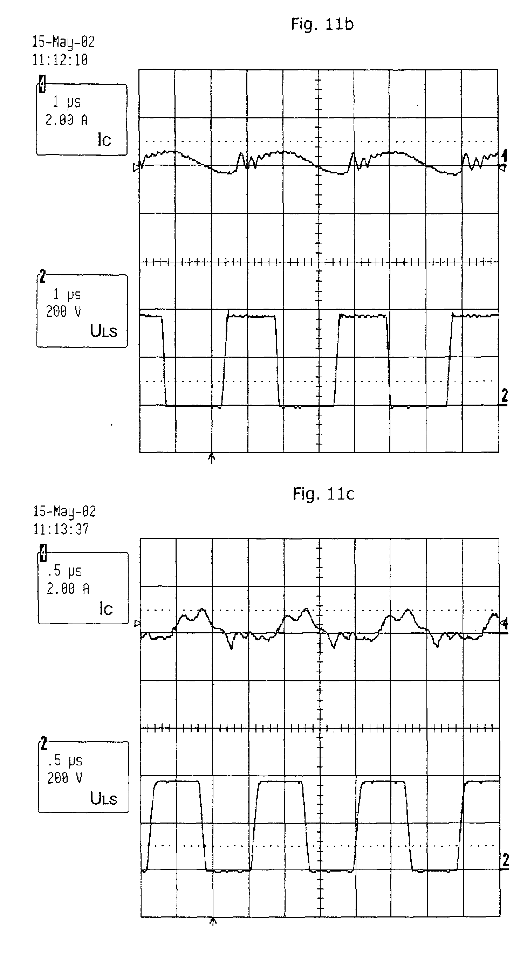

The time diagrams of Fig. 11a and Fig. 11b, showing the correlation of the the voltage U_{LS} and the node current I_{C} through the boost capacitor C_{boost}, were recorded with a primary power consumption of 160 W, while during recording of time diagram 11c the primary power consumption was set to 46W. Fig. 11a refers to the peak voltage (Imax), Fig. 11b to the zero transition (Imin) of the AC input voltage.

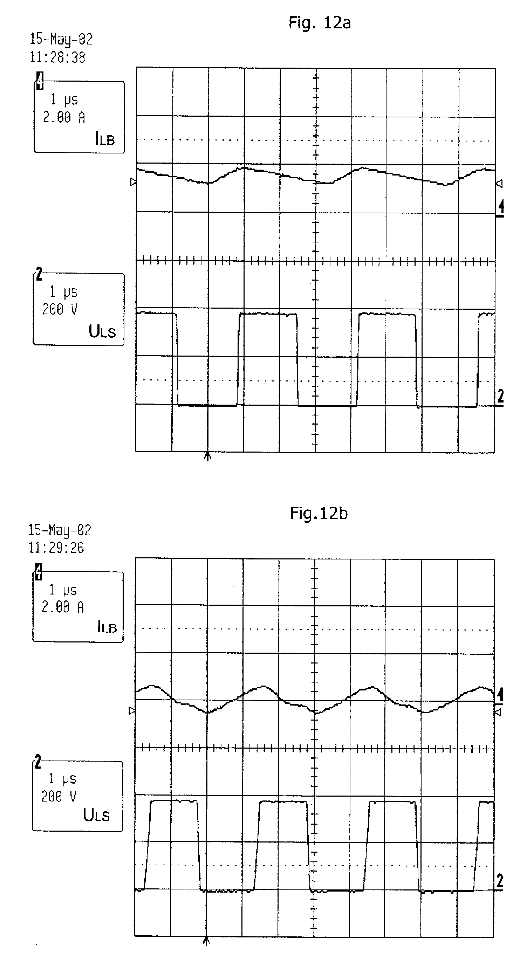

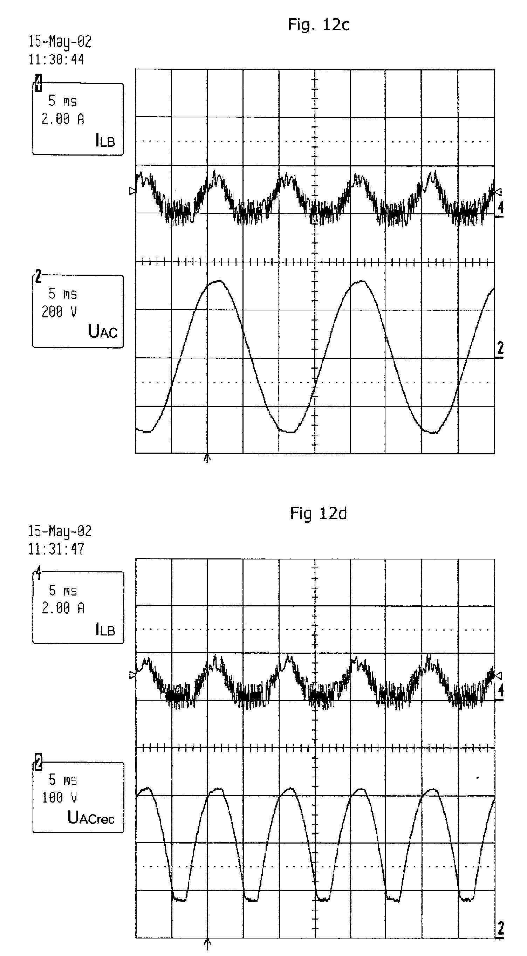

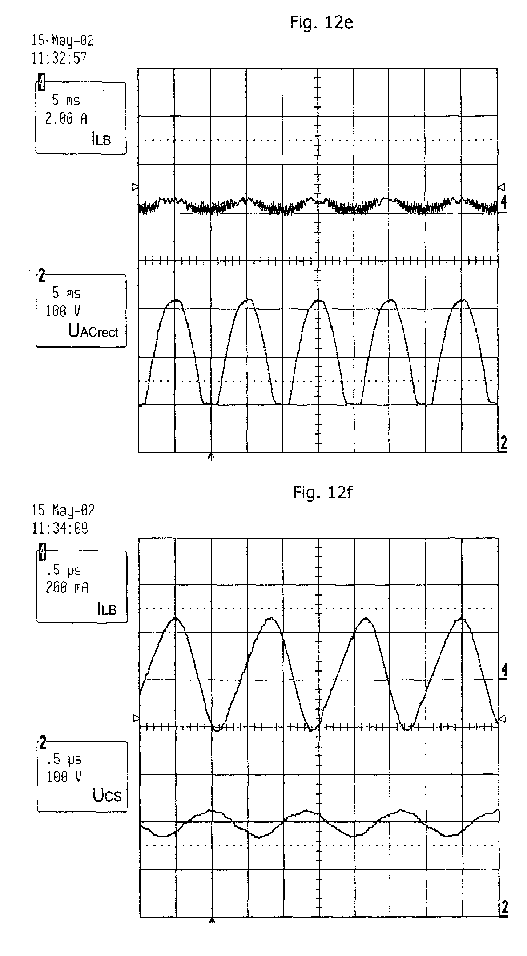

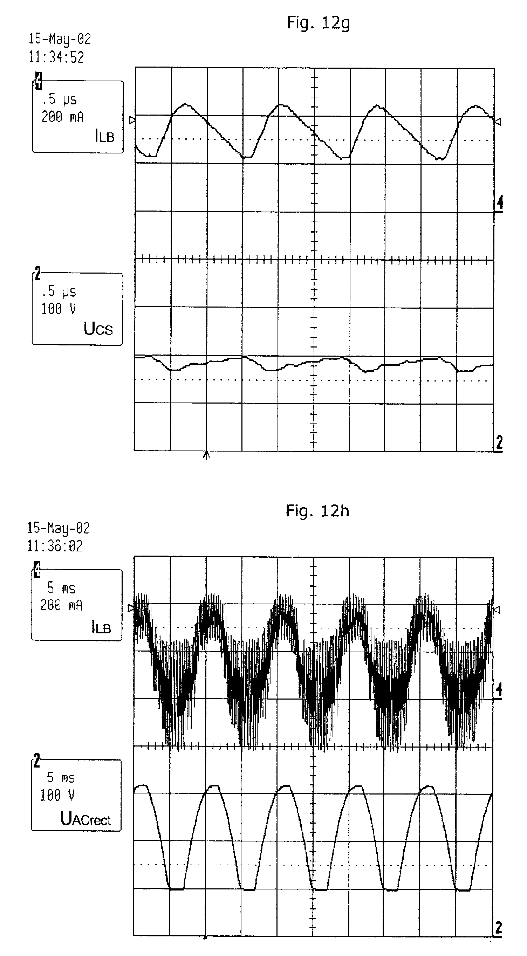

The recorded time diagrams of Fig. 12 show the correlation of a current I_{LB} through a boost inductor with internal and external signals of the inventive switched-mode power supply according to Fig. 4.

The time diagrams of Fig. 12a and Fig. 12b, showing a correlation between the current I_{LB} and the voltage U_{LS} across the low side switch were recorded while the primary power consumption was set to 160 W. Fig. 12a refers to the peak voltage (Imax), while Fig. 12b was recorded at the zero transition (Imin) of the AC input voltage.

The time diagram of Fig. 12c shows a correlation between the current I_{LB} and the AC input voltage U_{AC}, while the time diagram of Fig. 12d shows that between the current I_{LB} and a rectified AC input voltage Uᵢₙ. During recording of both diagrams the primary power consumption was set to 160 W.

Fig. 12e differs from Fig. 12d in that the primary power consumption was selected to 44 W.

Fig. 12f shows the correlation of the current I_{LB} and the voltage U_{CS} across the serial resonant capacitor C004 of the switched-mode power supply according to Fig. 4 recorded at a primary power consumption of 46 W at zero transition (Imin) of the AC input voltage.

Fig. 12g shows the correlation of the current I_{LB} and the voltage U_{CS} across the serial resonant capacitor C004 recorded at a primary power consumption of 44 W referred to the peak zero transition (Imax) of the AC input voltage.

The primary power consumption during recording of the current I_{LS} and the voltage U_{ACrect} as shown in Fig. 12h was set to 46 W.

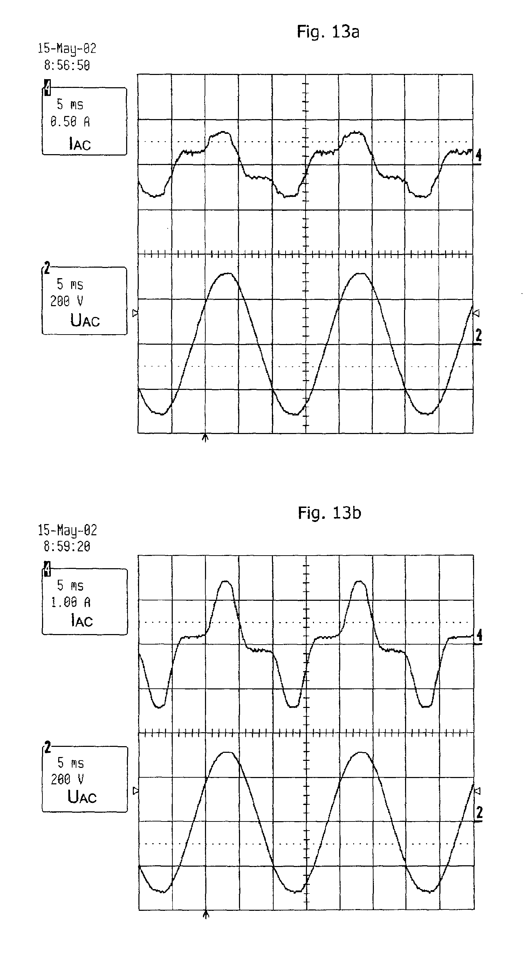

The time diagrams of Fig. 13 delineate the correlation between the AC input voltage U_{AC} and the AC current I_{AC} drawn from the input lines, usually the mains. The primary power consumption was set to 44 W during recording of the time diagram of Fig. 13a, while during recording for those of Fig. 13b the primary power consumption was set to 160 W.

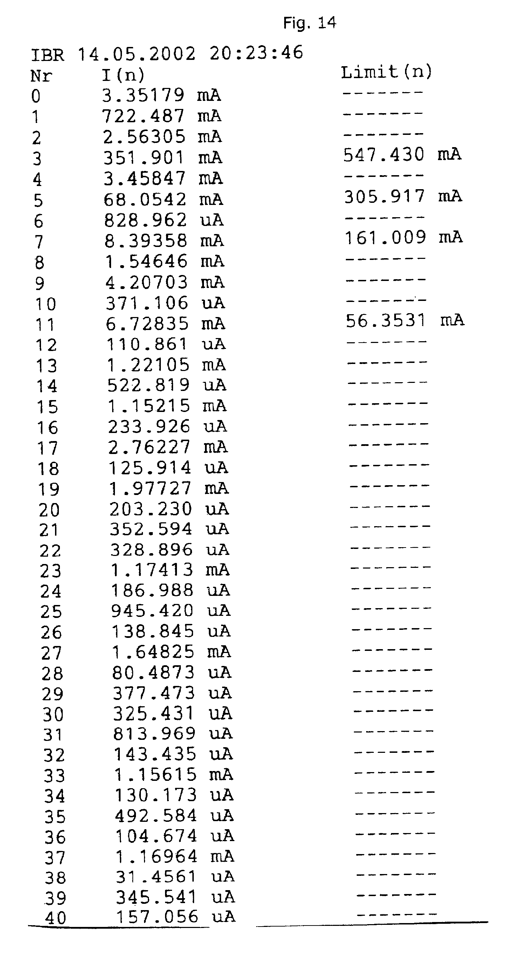

Fig. 14 shows a table with the peak currents at the harmonic frequencies of a 50 Hz AC input voltage as listed in row one. The measured values in row two do not exceed the permissible limits as listed in row three. The switch-mode power supply shown in Fig. 4 meets the requirements of EN61000.3.2.

## Claims

1. Switched-mode power supply, comprising:
- a boost means (1) showing a boost inductor (L_{boost}) and being capable of transforming a rectified AC input voltage (Uᵢₙ) into a primary regulated output voltage (Uₚᵣᵢ) at a first load terminal (5) and
- a resonant converter means (2) connected in series to said boost means (1) and being capable of transforming said primary regulated output voltage (Uₚᵣᵢ) into at least one secondary regulated output voltage (Uₒᵤₜ) across a load connected between a second (6) and a third (7) load terminal,
**characterized by**
a coupling network (10), additionally connecting said boost means (1) to said resonant converter means (2) and being capable of conducting at least portions of a magnetizing current of said boost inductor (L_{boost}).

2. Switched-mode power supply according to claim 1,
**characterized in that**
- said boost means (1) comprises a serial arrangement of said boost inductor (L_{boost}) and a boost diode (D_{boost}) and **in that**
- said boost means (1) is adapted to be controlled by said resonant converter means (2) by means of said coupling network (10) in a way that said primary regulated output voltage (Uₚᵣᵢ) is regulated or controlled and that harmonic current loads on said AC input voltage (Uᵢₙ) are reduced.

3. Switched-mode power supply according to anyone of the preceding claims,
**characterized in that**
- said boost means (1) shows an input terminal (3), a first load terminal (5), a reference terminal (4), and a boost node (8),
- said rectified AC input voltage (Uₚᵣᵢ) is applied between said input terminal (3) and said reference terminal (4),
- said primary output voltage (Uₚᵣᵢ) is available between said first load terminal (5) and said reference terminal (4),
- between said boost inductor (L_{boost}) and said boost diode (D_{boost}) said boost node (8) is formed, and
- a first terminal of said coupling network (10) is connected to said boost node (8).

4. Switched-mode power supply according to anyone of the preceding claims,
**characterized in that**
- said resonant converter means (2) comprises a switching facility (Sᵣₑₛ) and a resonant inductor (Lᵣₑₛ), both arranged in series to a first load (RL1) connected between a second (6) and a third (7) load terminal,
- between said first load (RL1) and said resonant inductor (Lᵣₑₛ) a resonant node (9) is formed, and
- a second terminal of said coupling network (10) is connected to said resonant node (9).

5. Switched-mode power supply according to anyone of the preceding claims,
**characterized in that**
said coupling network (10) comprises a boost capacitor (C_{boost}) arranged between said boost node (8) and said resonant node (9).

6. Switched-mode power supply according to anyone of the preceding claims,
**characterized in that**
said boost means (1) comprises a charge storage unit (11) arranged between said first load terminal (5) and said reference terminal (4).

7. Switched-mode power supply according to claim 6,
**characterized in that**
a second load (RL2) is arranged between said first load terminal (5) and said reference terminal (4).

8. Switched-mode power supply according to claim 7,
**characterized in that**
said charge storage unit (11) comprises a storage capacitor (Cₑₗₖₒ).

9. Switched-mode power supply according to anyone of the preceding claims,
**characterized in that**
said switching facility is a switching transistor (Sᵣₑₛ).

10. Switched-mode power supply according to anyone of the preceding claims,
**characterized by**
at least one resonant capacitor (Cᵣₑₛ) connected in series to said resonant inductor (Lᵣₑₛ).

11. Switched-mode power supply according to anyone of the preceding claims,
**characterized in that**
said switch (Sᵣₑₛ) is controllable by a control signal obtained by a resonant mode controller (IC), wherein said resonant mode controller (IC) is capable of varying a pulse width and/or a frequency of said control signal in accordance to a sense current feeding back at least one of said output voltages (Uₒᵤₜ) or said primary voltage (Uₚᵣᵢ) to said resonant mode controller (IC).

12. Switched-mode power supply according to claim 11,
**characterized by**
at least two feedback paths for feeding back at least one of said output voltages (Uₒᵤₜ) and said primary voltage (Uₚᵣᵢ) to a feedback input of said resonant mode controller (IC), wherein a portion of each feedback current of said total sense current can be selected according to said load regulation specifications of the respective voltage.

13. Switched-mode power supply according to anyone of the preceding claims,
**characterized in that**
said resonant converter means (2) is designed as a forward converter.

14. Switched-mode power supply according to anyone of the preceding claims,
**characterized in that**
said resonant converter means (2) is designed as an isolated converter.

15. Switched-mode power supply according to claim 14,
**characterized in that**
said resonant converter means (2) is designed as a half-bridge converter.

16. Switched-mode power supply according to claim 15,
**characterized in that**
on a secondary side of said half-bridge converter exactly one diode is arranged for rectifying an AC voltage transformed to said secondary side.

17. Switched-mode power supply according to claim 14,
**characterized in that**
said resonant converter means (2) is designed as a full-bridge converter.
